# EUROPÄISCHE PATENTSCHRIFT

(11) **EP 2 239 156 B1**
(45) Veröffentlichungstag und Bekanntmachung des Hinweises auf die Patenterteilung: **10.04.2013**
(21) Anmeldenummer: 10152989.9
(22) Anmeldetag: 09.02.2010
(51) Int. Cl.: B60G 17/052

(54) **Verfahren zur Luftdruckmessung**
Method for measuring air pressure
Procédé de mesure de la pression pneumatique

(30) Priorität: 09.04.2009 DE 102009003774
(43) Veröffentlichungstag der Anmeldung: 13.10.2010
(73) Patentinhaber: Continental Teves AG & Co. OHG, 60488 Frankfurt (DE)
(72) Erfinder: Nettelmann, Marc, 31061 Alfeld (DE); Backe, Constantin, 30455 Hannover (DE); Kohn, Joachim, 74321 Bietigheim (DE)

(56) Entgegenhaltungen:
- WO-A1-2005/002891
- WO-A1-2005/113272
- DE-B3-102004 048 830

## Beschreibung

Die Erfindung betrifft ein Verfahren zur Messung des Luftdrucks einzelner Luftfedern in Luftfederungseinrichtungen einer Luftfederungsanlage mit geschlossener Luftversorgung, wobei die Luftfederungsanlage aus mehreren Luftfedereinrichtungen besteht, mit denen jeweils ein Fahrzeugrad federnd aufgehängt ist. Eine Luftfedereinrichtung besteht im Wesentlichen aus der Luftfeder, dem Dämpfer und aus weiteren, zur Funktion erforderlichen und im Stand der Technik bekannten Komponenten, wie Zuleitungen, Ventile, Deckel, Anbindungen, Schutzvorrichtungen etc. Weiterhin beinhaltet die Luftfederungsanlage eine aus Luftdruckspeicher, Luftkompressor, Lufttrockner und entsprechenden Schaltventilen bestehende Luftversorgungsanlage sowie eine in der Zuleitung zu den Luftfederungseinrichtungen angeordneten Druckmesseinrichtung. Die Luftfederungsanlage weist außerdem Höhensensoren für jede Luftfedereinrichtung auf, welche die Stellung der Karosserie relativ zum Fahrzeugrad bzw. zum Fahrwerk messen, wonach die Stellung der Karosserie über die Steuerungseinrichtung in eine Höheninformation umgeformt wird.

Zur Luftdruckmessung innerhalb von Luftfederungsanlagen bzw. Niveauregelanlagen werden aus Kostengründen heutzutage möglichst wenige Drucksensoren eingebaut. Um trotz der wenigen Sensoren eine Messung des tatsächlichen Drucks in möglichst vielen Teilen einer Niveauregelanlage durchzuführen, sind im Stand der Technik Lösungen bekannt, bei denen der Druck in unterschiedlichen Systemen und/oder Systemkomponenten dadurch erfasst wird, dass über bestimmte Ventilschaltungen die zu messenden Komponenten selektiv mit dem Drucksensor verbunden werden.

Eine solche Lösung offenbart z.B. die DE 101 63 379 A1, bei der lediglich ein Drucksensor und eine Drucksensierventilanordnung vorgesehen ist, welche die selektive Verbindung zwischen Drucksensor und Luftfederbälgen schaltet.

Bei einer solchen sukzessive erfolgenden Druckmessung, bei der einzelne Systembestandteile selektiv mit dem Drucksensor verbunden werden, entsteht das Problem, dass durch Umschalten von Ventilen die zu messenden Volumina verändert werden, in dem plötzlich Leitungen, Speicher oder weitere Einrichtungsteile zugeschaltet werden und sich die Luft in der zu messenden Systemkomponente in einem größeren Volumen verteilen kann. Der Druck sinkt dadurch ab, was nachteiliger Weise auch zu einem plötzlichen Absenken einer Fahrzeugkarosserie führen kann, wenn eine Druckmessung eingeschaltet wird.

Ein weiteres Problem sind die Einschwingvorgänge, die beim Zuschalten von Leitungsteilen oder weiteren Volumina entstehen können. Eine solche Einschwingphase bis zum Anliegen des stationären Drucks am Drucksensor kann unterschiedlich lange andauern. Da jedoch die Zeit für die einzelnen Druckmessschritte vorgegeben ist, kann sich durch die Einschwingvorgänge ein Messfehler einschleichen. Die übliche Luftdruckmesszeit beträgt 700 Millisekunden, was an sich wenig erscheint, sich aber zu merkbaren Zeitverlusten addieren würde, wenn man die Druckmesszeit wesentlich verlängern würde.

Die DE 10 2005 054 506 A1 löst das Problem der Einschwingphase dadurch, dass vor dem Erreichen eines annähernd eingeschwungenen Zustandes des Drucksignals die Druckmessung gestoppt wird und anhand des Signalverlaufs des Drucks während der Messzeit auf den tatsächlich vorhandenen Druck in der Systemkomponente geschlossen wird.

Eine Lösung, die ein gutes Mittelmaß bei der Messung vorsieht und somit einen Kompromiss zwischen den beschriebenen Nachteilen findet, der mit einer Steuerungslogik kompatibel ist, war bisher im Stand der Technik nicht bekannt.

Für die Erfindung bestand also die Aufgabe, ein Verfahren zur Druckmessung anzugeben, welches einerseits ein Absacken des Fahrzeuges verhindert und andererseits eine schnelle, ausreichend sichere und in der vorgegebenen Messzeit durchführbare Druckmessung erlaubt.

Gelöst wird die Aufgabe durch die Merkmale des Hauptanspruchs. Vorteilhafte Weiterbildungen sind in den abhängigen Ansprüchen enthalten.

Dabei wird die Reihenfolge der Messung des tatsächlich vorhandenen Luftdruckes in den einzelnen Luftfedern abhängig gemacht von dem Differenzdruck, der aus einem Vergleich von Speicherdruck und von über Höheninformation abgeschätzten Druck in den Luftfedern ermittelt wird, wobei jedoch nach diesem Vergleich der tatsächlich vorhandene Druck in derjenigen Luftfedereinheit zuerst gemessen wird, für die durch die vorlaufende Druckabschätzung der geringste Differenzdruck zwischen Speicherdruck und geschätztem Luftfederdruck ermittelt wurde.

Zu Beginn einer Luftdruckmessung wird also in einem System mit geschlossener Luftversorgung mittels Speicherdruck und mittels Höheninformation der Höhenmesssensoren jeweils ein Luftfederdruck abgeschätzt.

Im Stand der Technik erfolgte bisher danach die Schaltung eines zusätzlichen Ventiles zur Sperrung der Hauptzuleitung zu den einzelnen Luftfedern, wenn der geschätzte Luftdruck in der Luftfeder größer war als der gemessene Speicherdruck. Dies geschah, um einen Luftstrom von der Luftfeder in den Druckspeicher und eine damit verbundene Absenkung des Fahrzeuges zu verhindern.

Danach wurden im Stand der Technik nach einer sequenziell vorgegebenen Reihenfolge die einzelnen Luftfedern mit dem Drucksensor verbunden und der tatsächliche Druck in den Luftfedern ermittelt. Die sequenzielle Reihenfolge war z.B. "hinten links - hinten rechts - vorne links - vorne rechts". Die Reihenfolge blieb natürlich bei jeder Luftdruckmessung gleich.

Die Erfindung löst die Probleme, die bei der Druckmessung auftraten, nun dadurch, dass die Reihenfolge der Messung des tatsächlich vorhandenen Luftdruckes in einzelnen Luftfedern abhängig von einer vorläufigen Schätzung erfolgt, nämlich von dem aus dem Vergleich von Speicherdruck und von über Höheninformation abgeschätzten Druck in den Luftfedern. Hier werden jedoch die geschätzten Druckhöhen in den Luftfedern miteinander verglichen und nach dem Vergleich der tatsächlich vorhandene Druck in derjenigen Luftfeder zuerst gemessen, für die durch die vorlaufende Schätzung der geringste Differenzdruck zwischen Speicherdruck und geschätztem Luftfederdruck ermittelt wurde. Die Lösung besteht also darin, dass eine immer neu zu bestimmende Reihenfolge der Druckmessung in den einzelnen Luftfedern abhängig von dem vorher abgeschätzten Differenzdruck erfolgt.

Dadurch vermeidet man, dass aufgrund einer vorgegebenen Abarbeitungsreihenfolge diejenige Luftfeder zuerst mit dem Drucksensor verbunden wird, die die größte oder eine hohe Druckdifferenz aufweist und dadurch - nämlich durch die Zuschaltung von Zusatzvolumen, wie bereits oben dargestellt - ein plötzliches Absinken der Karosserie auftreten könnte. Dies wird mit der erfindungsgemäßen Lösung sicher vermieden.

Auch wird hierdurch vermieden, dass die vorgegebene Druckmesszeit möglicherweise nicht genügend lang ist, um eine ausreichende Einschwenkphase des Drucksensorsignals zu erlauben. Dadurch nämlich, dass die Messung bei zu großen Druckdifferenzen vermieden wird, geschieht das Einschwingen schneller und die Druckmessung an sich erfolgt mit sichereren Ergebnissen.

Die Erfindung berücksichtigt also in der Festlegung der Abarbeitungsreihenfolge den geschätzten Druckunterschied, den der Luftfederdruck gegenüber dem gemessenen Speicherdruck aufweist. Die Abarbeitungsreihenfolge bei einer Luftfederdruckmessung ist damit variabel. Sie beginnt mit der Luftfeder, die die geringste Druckdifferenz zwischen geschätztem Luftfederdruck und dem Druck im Druckspeicher aufweist und fährt dann fort mit der Luftfeder, die als nächste die geringste Druckdifferenz aufweist. Die Ausnutzung der Messzeit ist durch geringe Einschwingvorgänge dadurch optimiert.

Dies sind auch die wesentlichen Vorteile einer Weiterbildung der Lösung, bei der der tatsächliche Luftdruck aller Luftfedereinheiten nacheinander und ausgehend von der geringsten Druckdifferenz zwischen Speicherdruck und abgeschätzten Luftfederdruck in der Luftfeder in einer Reihenfolge gemessen wird, in der sukzessive der tatsächliche Luftdruck in jeweils der Luftfeder gemessen wird, die nach der genannten Schätzung die nächsthöhere Druckdifferenz zwischen Speicherdruck und dem geschätzten Druck in der Luftfeder aufweist.

Eine weitere vorteilhafte Ausbildung besteht darin, dass nach jeder Messung des tatsächlichen Luftdrucks in einer Luftfeder eine neuerliche Schätzung der Druckdifferenz in den verbleibenden Luftfedern erfolgt. Dies führt zu einer permanenten Neubewertung der Druckdifferenz und damit dazu, dass auch bei den nachfolgenden Druckmessschritten in aller Regel genügend Messzeit für die Einschwenkphase zur Verfügung steht und ein Absacken der Karosserie weiter verhindert wird.

Eine weitere vorteilhafte Ausbildung des Verfahrens besteht darin, dass vor Beginn der Messungen/Druckmessungen des tatsächlichen Luftdrucks in den Luftfedern die Reihenfolge der Luftdruckmessung anhand der durchgeführten Schätzung aller durch Höheninformation ermittelten Druckdifferenzen festgelegt wird. Dadurch erspart man sich Rechenzeit innerhalb der Steuerungseinrichtung und hat für jede neue Druckmessroutine trotzdem wieder eine variable Reihenfolge der Druckmessungen in den einzelnen Luftfedern.

Eine weitere Ausbildung des Verfahrens besteht darin, dass die Druckmessung im Druckspeicher nicht durch eine Druckmesseinrichtung - wie dies im Stand der Technik üblich ist - erfolgt, sondern durch die Ermittlung der geförderten Luftmenge bei bekanntem Speichervolumen, also durch eine weitere Berechnung bzw. Schätzung. Dies führt dazu, dass ein weiterer Drucksensor, nämlich der für den Speicher eingespart werden kann.

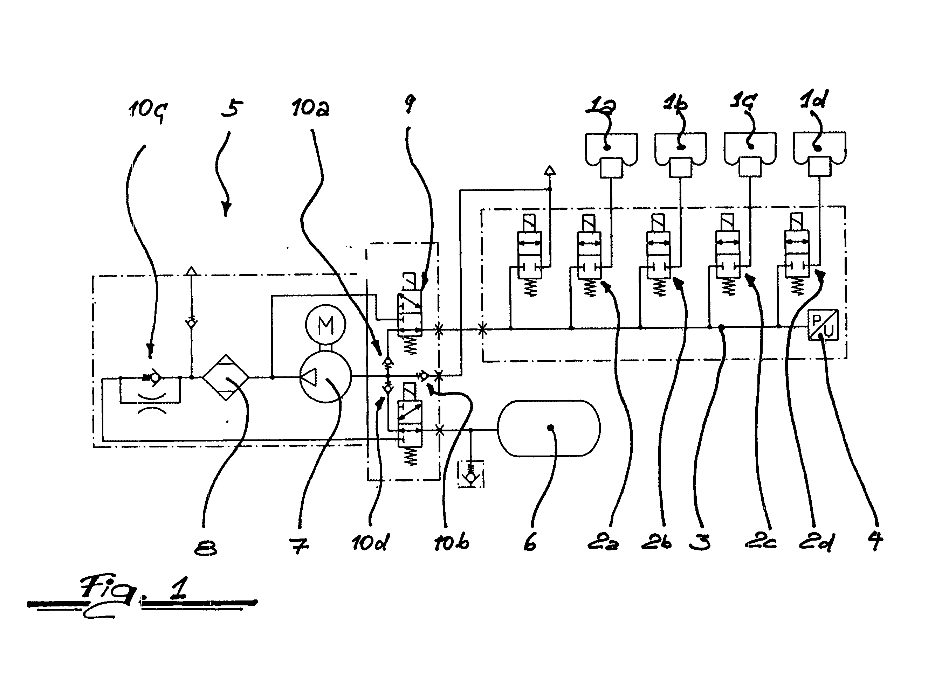

Anhand eines Ausführungsbeispiels soll die Erfindung näher verdeutlicht werden. Die einzige Fig. 1 zeigt eine Luftfederungsanlage mit geschlossener Luftversorgung und besteht aus den Luftfedern bzw. den Luftfederungseinrichtungen 1a bis 1d, die über als 2/2-Wegeventile ausgebildete Schaltventile 2a bis 2c mit der Hauptleitung oder Stammleitung 3 verbunden sind. In der Hauptleitung befindet sich der Druckmesssensor 4. Die Hauptleitung 3 ist über weitere Wegeventile mit der Luftversorgungsanlage 5 verbunden, die im Wesentlichen aus einem Luftdruckspeicher 6 einem elektrisch angetriebenen Kompressor 7 sowie aus dem Lufttrockner 8 besteht und weitere Drossel- und Schalteinrichtungen aufweist, die zum Ansaugen bzw. zum Ablassen von Luft erforderlich, hier jedoch nicht näher dargestellt sind, da sie für das erfindungsgemäße Verfahren keine herausragende Bedeutung haben.

Das erfindungsgemäße Messverfahren erfolgt nun so, dass der Luftdruck in den Luftfedern 1a bis 1d anhand der durch die Höhensensoren gemessenen und ermittelten Höheninformationen, d.h. anhand des Abstandes zwischen Karosserie und Fahrwerk berechnet und abgeschätzt wird und jeweils mit dem gemessenen Druck im Speicher 6 verglichen wird.

Anhand eines solchen Vergleichs wird ermittelt, welche der Luftfedern 1a bis 1d einen geschätzten Druck aufweist, der die geringste Differenz zum Speicherdruck zeigt. Diese Luftfeder wird nun zuerst der tatsächlichen Druckmessung unterworfen. Angenommen, dass die Luftfeder 1b diejenige ist, die die geringste Druckdifferenz aufweist, würden also die Ventile 2a, 2c und 2d geschlossen. Das Ventil 9 in der in der Zeichnung dargestellten Stellung belassen und das Ventil 2b geöffnet, damit der Drucksensor 4 den tatsächlich vorhandenen Druck in der Luftfeder 1b messen kann. Das zugeschaltete Leitungsvolumen der Hauptleitung 3 fällt dann bei einer vorher abgeschätzten geringen Druckdifferenz nicht mehr nachteilig ins Gewicht. Die Rückschlagventile 10a bis 10d verhindern einen Luftaustausch mit weiteren Systemkomponenten.

Danach erfolgt entweder eine neue Abschätzung einer durch Höheninformation gewonnen Luftdruckhöhe in den Luftfedern 1a, 1c und 1d oder aber das Ablaufen der anhand der vorlaufenden Schätzung bereits festgelegten Abarbeitungsreihenfolge.

### Bezugszeichenliste

### (Teil der Beschreibung)

- 1a bis 1d: Luftfedereinrichtung/Luftfeder
- 2a bis 2d: schaltbare Wegeventile
- 3: Hauptleitung/Stammleitung
- 4: Druckmesssensor
- 5: Luftversorgungsanlage
- 6: Druckspeicher
- 7: Kompressor
- 8: Trockner
- 9: Schaltventil
- 10a bis 10d: Rückschlagventile

## Patentansprüche

1. Verfahren zur Messung des Luftdrucks einzelner Luftfedern (1a- 1d) in Luftfederungseinrichtungen einer Luftfederungsanlage mit geschlossener Luftversorgung, wobei die Luftfederungsanlage besteht aus
- mehreren Luftfedereinrichtungen, mit denen jeweils ein Fahrzeugrad federnd aufgehängt ist,
- eine aus Luftdruckspeicher (6), Luftkompressor (7), Lufttrockner (8) und entsprechenden Schaltventilen bestehende Luftversorgungsanlage (5),
- einer in der Zuleitung zu den Luftfederungseinrichtungen angeordneten Druckmesseinrichtung (4),
- Höhensensoren für jede Luftfedereinrichtung, welche die Stellung der Karosserie relativ zum Fahrzeugrad bzw. Fahrwerk messen,
**dadurch gekennzeichnet,**
**dass** die Reihenfolge der Messung des tatsächlich vorhandenen Luftdruckes in einzelnen Luftfedern (1a - 1d) abhängig von dem aus dem Vergleich von
- Speicherdruck und von dem
- über Höheninformation abgeschätzten Druck in den Luftfedern erfolgt, wobei nach dem Vergleich der tatsächlich vorhandene Druck in derjenigen Luftfeder gemessen wird, für die durch die vorlaufende Schätzung der geringste Differenzdruck zwischen Speicherdruck und geschätztem Luftfederdruck ermittelt wurde.

2. Verfahren nach Anspruch 1, bei dem der tatsächliche Luftdruck aller Luftfeder (1a - 1d) nacheinander und ausgehend von der geringsten Druckdifferenz zwischen Speicherdruck und abgeschätztem Luftfederdruck in der Luftfeder in einer Reihenfolge gemessen wird, in der sukzessive der tatsächliche Luftdruck in jeweils der Luftfeder gemessen wird, die nach Schätzung die nächsthöhere Druckdifferenz zwischen Speicherdruck und dem geschätzten Druck in der Luftfeder aufweist.

3. Verfahren nach Anspruch 1 oder 2, bei dem nach jeder Messung des tatsächlichen Luftdrucks in einer Luftfeder eine neuerliche Schätzung der Druckdifferenz in den verbleibenden Luftfedern erfolgt.

4. Verfahren nach Anspruch 1 oder 2, bei dem vor Beginn der Messung des tatsächlichen Luftdrucks in den Luftfedern die Reihenfolge der Luftdruckmessung festgelegt wird durch eine Schätzung aller Druckdifferenzen.

5. Verfahren nach Anspruch 1 bis 4, bei dem die Druckmessung im Druckspeicher (6) durch die Ermittlung der geförderten Luftmenge bei bekanntem Speichervolumen erfolgt.

6. Verfahren nach Anspruch 1 bis 4, bei dem der Druckspeicher (6) eine separate Druckmesseinrichtung aufweist.

## Claims

1. Method for measuring the air pressure of individual air springs (1a-1d) in pneumatic suspension devices of a pneumatic suspension system with a closed air supply, wherein the pneumatic suspension system is composed of
- a plurality of pneumatic suspension devices with each of which a vehicle wheel is suspended in a sprung fashion,
- an air supply system (5) which is composed of an air pressure accumulator (6), air compressor (7), air dryer (8) and corresponding switching valves,
- a pressure measuring device which is arranged in the feed line to the air suspension devices,
- height sensors for each air suspension device which measure the position of the vehicle body relative to the vehicle wheel or chassis,
**characterized**
**in that** the sequence of measurement of the air pressure which is actually present in individual air springs (1a-1d) takes place as a function of comparison of
- the accumulator pressure and of the
- pressure in the air springs estimated by means of altitude information,
wherein, after the comparison, the pressure which is actually present in the air spring for which the smallest pressure difference between the accumulator pressure and the estimated air spring pressure was determined by means of the estimation above is measured.

2. Method according to Claim 1, in which the actual air pressure of all the air springs (1a-1d) is measured in a sequence starting from the smallest pressure difference between the accumulator pressure and the estimated air spring pressure in the air spring, in which sequence the actual air pressure in the respective air spring which has, according to the estimation, the next highest pressure difference between the accumulator pressure and the estimated pressure in the air spring, is successively measured.

3. Method according to Claim 1 or 2, in which, after each measurement of the actual air pressure in an air spring, a new estimation of the pressure difference in the remaining air springs is carried out.

4. Method according to Claim 1 or 2, in which, before the start of the measurement of the actual air pressure in the air springs, the sequence of the measurement of the air pressure is defined by an estimation of all the pressure differences.

5. Method according to Claims 1 to 4, in which the pressure measurement in the pressure accumulator (6) is carried out by determining the delivered air quantity for a known accumulator volume.

6. Method according to Claims 1 to 4, in which the pressure accumulator (6) has a separate pressure-measuring device.

## Revendications

1. Procédé de mesure de la pression d'air régnant dans différents amortisseurs pneumatiques (1a-1d) de dispositifs de suspension pneumatique d'un système de suspension pneumatique à alimentation en air en boucle fermée, le système de suspension pneumatique étant constitué de :
plusieurs dispositifs de suspension pneumatique à chacun desquels est suspendue une roue,
un système (5) de suspension pneumatique constitué d'une réserve (6) d'air sous pression, d'un compresseur d'air (7), d'un sécheur d'air (8) et de soupapes de commutation appropriées,
un dispositif (4) de mesure de pression disposé dans le conduit d'alimentation des dispositifs de suspension pneumatique,
des sondes de hauteur prévues pour chaque dispositif de suspension pneumatique et qui mesurent la position du châssis par rapport aux roues du véhicule ou au train de roulement,
**caractérisé en ce que**
les mesures de la pression d'air qui règne effectivement dans les différents amortisseurs pneumatiques (1a-1d) se succèdent en fonction de la comparaison entre la pression qui règne dans la réserve et la pression qui règne dans les amortisseurs pneumatiques, estimée en fonction des informations de hauteur et
**en ce qu'**après la comparaison, la pression qui règne effectivement dans l'amortisseur pneumatique pour lequel l'estimation antérieure a indiqué la plus petite différence entre la pression qui règne dans la réserve et la pression estimée qui règne dans les amortisseurs pneumatiques est mesurée.

2. Procédé selon la revendication 1 dans lequel la pression d'air qui règne effectivement dans tous les différents amortisseurs pneumatiques (1a-1d) est mesurée successivement et, partant de la plus petite différence entre la pression qui règne dans la réserve et la pression estimée qui règne dans les amortisseurs pneumatiques, les mesures successives de la pression qui règne dans chacun des amortisseurs pneumatiques s'effectuant dans l'ordre croissant des différences de pression estimées entre la pression qui règne dans la réserve et la pression estimée qui règne dans les différents amortisseurs pneumatiques.

3. Procédé selon les revendications 1 ou 2, dans lequel après chaque mesure de la pression qui règne effectivement dans un amortisseur pneumatique, une nouvelle estimation de la différence de pression a lieu pour les amortisseurs pneumatiques restants.

4. Procédé selon les revendications 1 ou 2, dans lequel avant le début de la mesure de la pression qui règne effectivement dans un amortisseur pneumatique, la succession des mesures est définie par une estimation de toutes les différences de pression.

5. Procédé selon les revendications 1 à 4, dans lequel la mesure de la pression qui règne dans la réserve sous pression (6) s'effectue en déterminant la quantité d'air transportée, le volume de la réserve étant connu.

6. Procédé selon les revendications 1 à 4, dans lequel la réserve sous pression (6) présente un dispositif séparé de mesure de pression.
